# EUROPEAN PATENT APPLICATION

(11) **EP 1 235 315 A2**
(43) Date of publication of application: **28.08.2002**
(21) Application number: 01117915.7
(22) Date of filing: 24.07.2001
(51) Int. Cl.: H01S 3/108

(54) **Two-wavelength laser apparatus**

(30) Priority: 27.02.2001 JP 2001051575
(71) Applicant: FURUKAWA CO., LTD., Tokyo 100-8370 (JP)
(72) Inventor: Usuki, Yoshiyuku, Ushiku-shi, Iberaki 300-1234 (JP); Omatsu, Takashige, Yokohama-shi, Kanagawa 244-0802 (JP)
(74) Representative: Sparing - Röhl - Henseler Patentanwälte

(57) **Abstract**

To provide a small-sized and low-priced two-wavelength laser apparatus capable of obtaining two-wavelength laser light from one solid crystal at the same time.

In the laser apparatus including: a solid crystal of laser medium (2); a semiconductor laser diode (6) for excitation for generating laser light by exciting the laser medium and a condenser (5); and a reflecting mirror (1) and a laser output mirror (4) for resonating light generated from the laser medium, there is used a single crystal (2) PbWO₄, which is a Raman crystal, as a solid crystal of laser medium to thereby perform laser emission of two wave length with one solid crystal at the same time.

## Description

### FIELD OF THE INVENTION

The present invention relates to a two-wavelength laser apparatus for Stokes light and anti-Stokes light which are generated as a result of laser emission and Raman conversion.

### BACKGROUND OF THE INVENTION

In a fluorescent microscope, an attempt to improve apparent space separating property has been made by using two-wavelength laser light and by taking advantage of nonlinear characteristic of light emitting of coloring matter.

Conventionally, it has been necessary to have two types of laser apparatuses in order to obtain two-wavelength laser light at the same time. When two types of laser apparatuses are used, however, the fluorescent microscope becomes large in size of the entire apparatus, leading to an increase in cost.

In order to obtain two-wavelength laser light with one type of laser apparatus, a wavelength variable laser apparatus has also been put in practical use, but this laser apparatus becomes complicated and larger in size because diffraction grating and a double refraction plate are mechanically driven for changing the wavelength. Also, even if the wavelength variable laser apparatus maybe used, it is impossible to obtain two-wavelength laser emission by one apparatus at the same time.

On the other hand, there has also been studied a laser apparatus capable of obtaining two wave length through the use of a Raman crystal. A laser emission from a laser crystal (for example, Nd:YAG) is divided into two, leaving one as it is, and passing the other through the Raman crystal to obtain emission deviated by an amount corresponding to Raman shift. Therefore, a device for dividing laser light, an optical system for guiding light thus divided to the Raman crystal, the Raman crystal and the like will be required in excess so that it is inevitable that the apparatus will become further complicated and larger.

### BRIEF SUMMARY OF THE INVENTION

### Object of the Invention

As described above, there has not been put in practical use a laser apparatus capable of obtaining two-wavelength laser light with one solid crystal at the same time.

It is an object of the present invention to solve the above-described problem in the laser apparatus, and to provide a small-sized, reliable and low-priced two-wavelength laser apparatus capable of obtaining two-wavelength laser light from one solid crystal at the same time.

### SUMMARY OF THE INVENTION

According to the present invention, the above-described problem is solved by a two-wavelength laser apparatus including: a solid crystal of laser medium; light source means for excitation for generating laser light by exciting the laser medium; and light resonant means for resonating light generated from the laser medium, in which a single crystal PbWO₄, which is a Raman crystal, is used for the solid crystal of laser medium to perform laser emission of two-wavelength with one solid crystal at the same time.

This two-wavelength laser apparatus uses a single crystal PbWO₄, which is a Raman crystal, for a solid crystal of laser medium and causes Nd, Yb, Er, Pr, Eu, Tb, Sm and the like as laser active material to be contained in the solid crystal to thereby emit laser emission from the solid crystal, and Stokes light and anti-Stokes light which have been Raman-converted, each having a Raman shift amount of about 900 cm⁻¹ at the same time.

When Nd is used for the laser active material, light emitting having two peaks in 1058 nm (9451.8 cm⁻¹) and 1170 nm (8551.8 cm⁻¹) deviated by 900 cm⁻¹ respectively is recognized, and two-wavelength laser emission is generated at the same time.

The laser active material in the solid crystal has generally preferably higher content because it is higher in efficiency. In the single crystal PbWO₄, however, when the concentration of laser active material exceeds 10 mol%, machining such as cutting and polishing cannot be performed. Also, when the concentration of laser active material in PbWO₄ exceeds 18 mol%, the single crystal cannot be made. Therefore, the concentration of the laser active material in PbWO₄ must be 10 mol% or less, and it is preferably 5 mol% or less.

On the other hand, since when the concentration of the laser active material in single crystal PbWO₄ is 0.01 mol% or less, no laser emission occurs, it is necessary to set the concentration of laser active material to 0.01 mol% or higher, and is preferably set to 0.05 mol% or higher.

When used for a fluorescent microscope, laser light having wavelength of about 500 nm to 600 nm is desirable. When Nd is used as laser active material, laser emission occurred from the single crystal PbWO₄ and Raman-shifted light are caused to pass through a SHG element such as LN or a harmonics-producer, whereby second harmonic generation can be obtained, and therefore, light of 529 nm and 585 nm can be obtained at the same time.

Further when light of short wave length should be obtained, third harmonic and fourth harmonic from the SHG element or the harmonics-producer, and the like can be used.

Therefore, even when two-wavelength laser light is obtained at the same time, any other excessive equipment than the laser emission apparatus becomes unnecessary, and the laser apparatus can be miniaturized at low cost.

When a semiconductor laser diode is used as light source means for excitation, it is possible to implement a small-sized, highly reliable two-wavelength laser apparatus having a small number of components in the entire solid, and when a Q-switch is provided, pulse laser light with narrow pulse width and a high peak value can be obtained.

When light from the light source means for excitation is incident to the solid crystal of laser medium in a direction of 90° ± 45° with respect to the optical axis, the light is hardly reflected by the incident surface, and loss of the incident energy will be reduced.

### BRIEF DESCRIPTION OF THE DRAWINGS

FIG. 1 is a block diagram showing a two-wavelength laser apparatus according to an embodiment of the present invention; and
FIG. 2 is a graph showing output laser light from the two-wavelength laser apparatus.

### DETAILED DESCRIPTION OF THE PREFERRED EMBODIMENTS

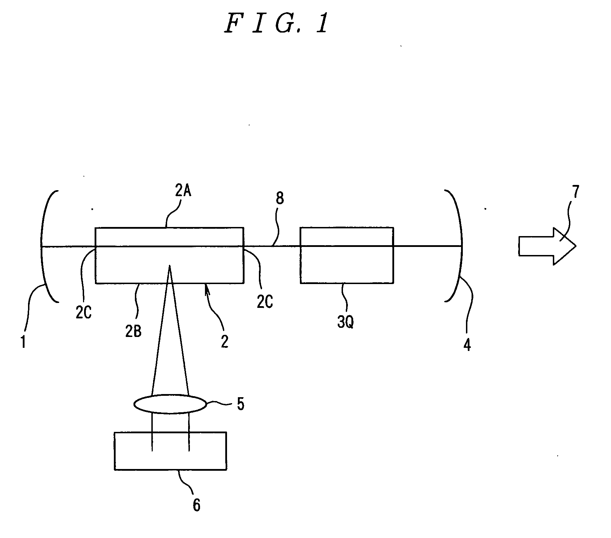

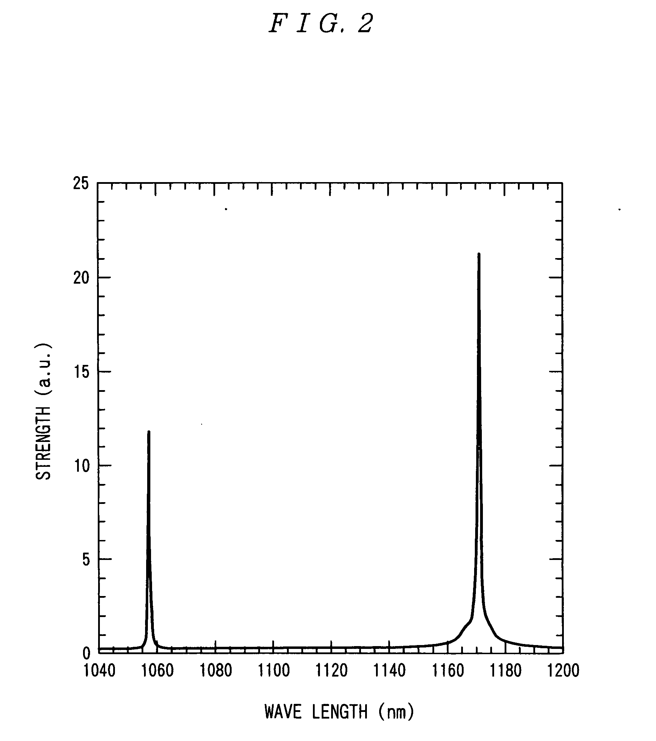

FIG. 1 is a block diagram showing a two-wavelength laser apparatus according to an embodiment of the present invention, and FIG. 2 is a graph showing output laser light from the two-wavelength laser apparatus.

In this laser apparatus, there is used a single crystal PbWO₄ 2, which is a Raman crystal, as a solid crystal of laser medium. Also, as light source means for excitation for generating laser light 7 by exciting the laser medium, a semiconductor laser diode 6 and a condenser 5 are provided, and as light resonant means for resonating light generated from the laser medium, there are provided a reflecting mirror 1 and a laser output mirror 4. Further, on an optical axis 8 of the laser light 7, there is provided a Q-switch 3.

The single crystal PbWO₄ 2 contains Nd as laser active material. The semiconductor laser diode 6 has a repetition rate of 20Hz, and emits laser light (excitation light) of 808 nm which is absorption wave length of Nd. The condenser 5 condenses this excitation light to cause the single crystal PbWO₄ 2 to be incident in a direction of 90° with respect to the optical axis 8.

A surface 2B, on which excitation light from the single crystal PbWO₄ 2 is incident, is covered with anti-reflection coat against excitation light of 808 nm, and a surface 2A opposite thereto is covered with mirror finished surface coat against excitation light of 808 nm. This mirror finished surface coat is used to reflect excitation light of 808 nm and to increase a course of the single crystal PbWO₄ 2 for being effectively utilized.

An optical axis surface 2C of the single crystal PbWO₄ 2 is covered with anti-reflection coat against emission wavelength 1.06 µm of the laser active material Nd.

In this respect, when the laser active material to be contained in the single crystal PbWO₄ 2 is different from Nd, the surface 2B, on which excitation light from the single crystal PbWO₄ 2 is incident, must be covered with anti-reflection coat against absorption wave length of the laser active material, and the surface 2A opposite thereto must be covered with the mirror finish surface coat against the absorption wave length of the laser active material. Further, the optical axis surface 2C of the single crystal PbWO₄ 2 must be covered with anti-reflection coat against the emission wavelength of the laser active material.

Also, an incident direction of excitation light to the single crystal 2 PbWO₄ does not have to be a direction of 90° with respect to the optical axis, but if it deviates larger from the direction of 90°, the light will be more reflected on the incident surface to increase the loss in the incident energy, which is disadvantageous. Therefore, the incident direction of the excitation light is preferably set to within 90° ± 45° with respect to the optical axis. Of course, the light may be incident in a direction of the optical axis, which is a general method to excite a solid laser crystal.

For the Q-switch 3, a Cr:YAG crystal is used, but super-saturated coloring matter or a semiconductor MQW type super-saturated absorption element may be used. Further, even if a continuous emission type may be used for a laser light source for exciting the single crystal PbWO₄ 2, the similar effect can be obtained.

When a single crystal PbWO₄ (3 × 3 × 15 mm) containing Nd of 0.5 mol% is used for the single crystal PbWO₄ 2 in the two wavelength laser apparatus of FIG. 1 and laser light is irradiated by the 20Hz pulse type semiconductor laser diode at wavelength of 808 nm as excitation light, simultaneous occurrence of laser light 7 with wavelength of 1058 nm and 1170 nm from a laser output mirror 4 has been confirmed as shown in Fig 2.

Also, the similar result could be obtained when continuous wave laser light of 808 nm was used.

As a result of analizing the laser light 7 emitted, it has been found out that emission of 1058 nm is laser light by Nd, and emission of 1170 nm is light obtained when light of 1058 nm Raman-scatters (Raman shift about 900 cm⁻¹) within the crystal (Raman laser).

Also, when respective light is caused to pass through a harmonic element, it has also been confirmed that light half the wave length can be taken out. Further, even if Yb, Er, Pr, Eu, Tb, or Sm is used for the laser active material, light emitting responsive to respective laser active material and emitting of Raman-scattered Stokes light and anti-Stokes light have been observed at the same time.

According to a two-wavelength laser apparatus of the present invention, it is possible to obtain two wavelength laser light from one solid crystal at the same time, and to implement a small-sized apparatus at low cost.

As laser active material, Nd, Yb, Er, Pr, Eu, Tb, Sm or the like is caused to be contained in a solid crystal, whereby laser light that has emitted from the solid crystal, and Stokes light and anti-Stokes light which have been Raman converted, each having a Raman shift amount of about 900 cm⁻¹ can be emitted at the same time.

When a semiconductor laser diode is used for light source means for excitation, it is possible to implement a small-sized, highly reliable two-wavelength laser apparatus having a small number of components in the entire solid, and when a Q-switch is provided, pulse laser light with narrow pulse width and a high peak value can be obtained.

When light from the light source means for excitation is incident to the solid crystal of laser medium in a direction of 90° ± 45° with respect to the optical axis, the light is hardly reflected by the incident surface, and loss of the incident energy will be reduced.

## Claims

1. A two-wavelength laser apparatus, comprising:
a solid crystal of laser medium;
light source means for excitation for generating laser light by exciting said laser medium; and
light resonant means for resonating light generated from said laser medium,
wherein a single crystal PbWO₄, which is a Raman crystal, is used for said solid crystal of laser medium to perform laser emission of two-wavelength with one solid crystal at the same time.

2. The two-wavelength laser apparatus according to claim 1, wherein said solid crystal of laser medium contains one or more types of elements, of Nd, Yb, Pr, Eu, Tb and Sm as laser active material.

3. The two-wavelength laser apparatus according to claim 1 or 2, wherein a semiconductor laser diode is used as light source means for excitation and there is provided a Q-switch.

4. The two-wavelength laser apparatus according to claim 1, 2 or 3, wherein light from said light source means for excitation is incident to said solid crystal of laser medium in a direction of 90° ± 45° with respect to an optical axis.
